# DEMANDE DE BREVET EUROPEEN

(11) **EP 2 161 446 A1**
(43) Date de publication de la demande: **10.03.2010**
(21) Numéro de dépôt: 09169460.4
(22) Date de dépôt: 04.09.2009
(51) Int. Cl.: F03D 11/00

(54) **Eolienne**

(30) Priorité: 09.09.2008 FR 0804941
(71) Demandeur: Suez Environnement, 75008 Paris (FR)
(72) Inventeur: Duong, Frédéric, 66370, Pezilla-La-Riviere (FR)
(74) Mandataire: Michardière, Bernard

(57) **Abrégé**

Eolienne comprenant un mât vertical équipé d'un rotor avec pales et dont la base du mât est ancrée dans un massif, le mât comporte au moins un conduit (6, 6a) s'étendant verticalement suivant le mât (1) entre une ouverture basse (7) située en partie inférieure du mât et une ouverture haute (8, 8a) située en partie supérieure du mât, le conduit intérieur ou le mât (6,6a) pouvant ainsi servir de cheminée soit pour l'évacuation de gaz, soit pour l'aspiration d'air propre.

## Description

L'invention est relative à une éolienne du genre de celles qui comprennent un mât vertical équipé d'un rotor avec pales et dont la base est ancrée dans un massif, comportant au moins un conduit s'étendant verticalement suivant le mât entre une ouverture basse située en partie inférieure du mât et une ouverture haute située en partie supérieure du mât.

Depuis plusieurs années, les éoliennes se développent à un rythme qui s'accélère. L'évolution technologique des éoliennes est orientée vers l'augmentation de leur taille et de leur puissance pouvant aller jusqu'à 5 MW actuellement. Consécutivement, la hauteur des mâts supports a augmenté de quelques dizaines de mètres à plus de 100 m.

Selon leur hauteur, et les conditions locales de vent, les mâts, qui sont creux, peuvent avoir des diamètres de 1 à 5 m. Les mâts peuvent être réalisés sous forme d'une virole métallique soudée, ou en béton armé ou autre matériau approprié.

Le rotor avec pales de l'éolienne peut être à axe horizontal, avec des pales dont le plan moyen est vertical ou avec un axe vertical avec des pales dont le plan moyen est horizontal. L'éolienne est équipée d'un démultiplicateur mécanique qui assure, généralement, l'entraînement d'un alternateur ou d'une génératrice de courant électrique. Des équipements secondaires sont prévus, notamment un transformateur élévateur de tension et des équipements de contrôle, de commande et de sécurité. Le massif d'ancrage du mât est généralement réalisé en béton armé et peut atteindre plusieurs centaines de tonnes de manière à résister au moment des efforts dus au vent.

La réalisation d'une telle éolienne représente donc un investissement important dont il est souhaitable de tirer le meilleur parti.

DE 10 2004 061 391 décrit la partie inférieure d'une tour d'éolienne avec une entrée d'air pour refroidir des installations en partie basse de cette tour, et une évacuation de l'air chaud plus haut. Les pales de l'éolienne ne sont pas visibles.

DE 199 47 915 décrit également une éolienne avec refroidissement par air, entrant en partie basse, d'un groupe qui peut être constitué d'un redresseur de courant. L'air est évacué en partie haute, à l'opposé de l'hélice, derrière le capotage d'un ensemble mécanique.

Dans les deux cas, il s'agit simplement d'évacuer de l'air de refroidissement.

L'invention a pour but, surtout, de proposer une éolienne qui offre des avantages d'exploitation supplémentaires.

Selon l'invention, une éolienne comprenant un mât vertical équipé d'un rotor avec pales et dont la base est ancrée dans un massif, comportant au moins un conduit s'étendant verticalement suivant le mât entre une ouverture basse située en partie inférieure du mât et une ouverture haute située en partie supérieure du mât, est **caractérisée en ce que** l'ouverture haute du conduit est située dans la zone des turbulences créées par les pales du rotor pour favoriser la dispersion des gaz dans l'atmosphère, le conduit pouvant servir de cheminée soit pour l'évacuation de gaz, soit pour l'aspiration d'air propre.

De préférence, lorsque le mât de l'éolienne est creux et de grosse section, le conduit est situé à l'intérieur du mât. Le conduit peut être constitué par l'espace creux du mât lui-même lorsque la nature des gaz le permet. En variante, le conduit peut être disposé à l'extérieur du mât et fixé sur celui-ci, notamment dans le cas d'éoliennes de petite taille.

Lorsque l'éolienne est utilisée comme conduit de cheminée d'évacuation de gaz de combustion ou d'air vicié, l'ouverture haute du conduit est située, de préférence, dans la zone des turbulences créées par les pales du rotor pour favoriser la dispersion des gaz dans l'atmosphère. Un déflecteur motorisé peut être mis en place au niveau de cette ouverture haute pour éviter le rejet des gaz directement sur les pales du rotor. Un diffuseur annulaire peut être prévu en partie supérieure en liaison avec l'ouverture haute du conduit.

De préférence, le rotor est monté sur l'axe de sortie d'une nacelle montée rotative autour d'un axe vertical porté par le mât , le montage rotatif permettant aux pales de l'hélice de se placer face au vent, et deux ouvertures hautes diamétralement opposées sont prévues fixes sur la tour de sorte que la zone des turbulences créées par les pales affecte toujours au moins un écoulement sortant par l'une des ouvertures.

Avantageusement, les ouvertures sont situées sur le mât à une distance verticale de l'axe de rotation des pales supérieure à la moitié de la longueur des pales, de préférence situées au voisinage de la zone balayée par l'extrémité des pales où les turbulences sont fortes.

Lorsque les gaz à rejeter sont des gaz de combustion chauds ou nocifs, on prévoit de préférence un ou plusieurs conduits indépendants et éventuellement calorifugés à l'intérieur du mât de l'éolienne. Lorsqu'il s'agit d'air vicié ou malodorant, le mât de l'éolienne peut servir directement de conduit de cheminée.

Selon la disposition, une cage verticale permet l'accès à une nacelle située en haut du mât, pour la maintenance.

L'éolienne peut être installée à proximité d'une unité industrielle quelconque (en particulier: station d'épuration d'eaux résiduaires, séchage de boues, agroalimentaire, chimie, pétrochimie) pour disperser dans l'atmosphère l'air vicié provenant de l'unité, et pour fournir de l'énergie électrique à cette unité industrielle.

L'éolienne est avantageusement installée à proximité d'une station d'épuration d'eaux résiduaires pour disperser dans l'atmosphère l'air vicié provenant de l'usine, et pour fournir simultanément de l'énergie électrique à cette station d'épuration. En variante, l'éolienne pourrait être installée à proximité d'une installation de séchage de boues de stations d'épuration, l'énergie électrique produite par l'éolienne servant au séchage des boues, tandis que l'air vicié provenant de cette station de séchage est dispersé par l'éolienne.

L'éolienne peut être installée à proximité d'une petite centrale thermique ou chaufferie industrielle dont elle constitue une cheminée de rejet des gaz de combustion.

Le conduit de l'éolienne peut servir pour l'aspiration d'air propre bien au-dessus du sol.

Une cloison interne peut être prévue dans l'espace creux du mât de l'éolienne pour une séparation en plusieurs compartiments.

L'invention consiste, mises à part les dispositions exposées ci-dessus, en un certain nombre d'autres dispositions dont il sera plus explicitement question ci-après à propos d'un exemple de réalisation décrit avec référence au dessin annexé, mais qui n'est nullement limitatif.

Sur ce dessin :

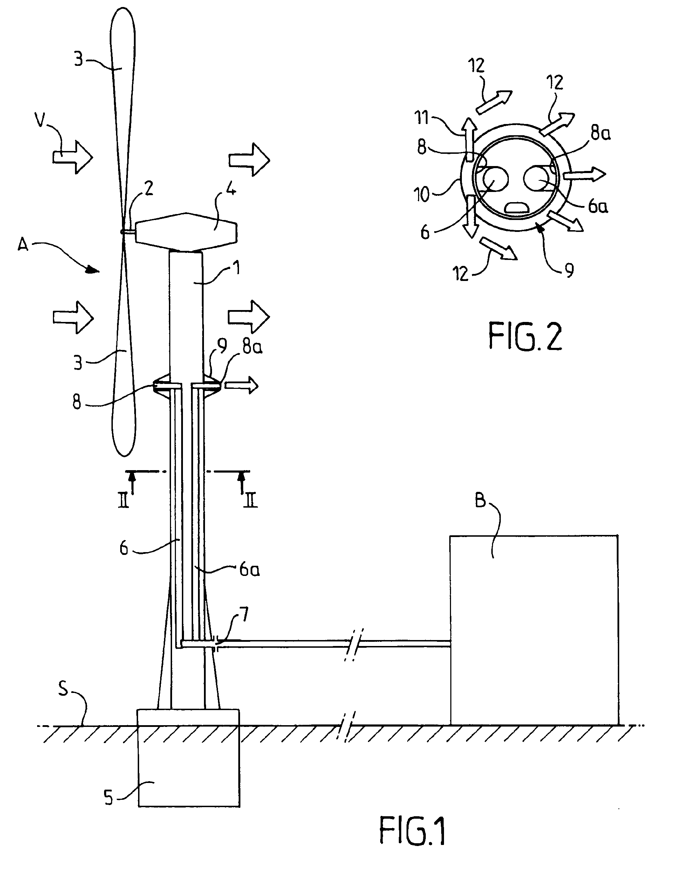

Fig. 1 est une coupe schématique verticale d'une éolienne selon l'invention.
Fig. 2 est une coupe horizontale, à plus grande échelle, selon la ligne II-II de Fig.1, et
Fig.3 est une coupe schématique verticale d'une variante de réalisation selon l'invention.

En se reportant au dessin, on peut voir une éolienne A comprenant un mât vertical 1 équipé, au sommet, d'un rotor 2 avec pales 3. Dans l'exemple représenté, l'axe géométrique du rotor 2 est horizontal tandis que les pales 3 ont un plan moyen vertical. Une autre disposition est possible avec rotor à axe géométrique vertical et pales ayant un plan moyen horizontal.

Le rotor 2 est monté sur l'axe de sortie d'une nacelle 4, équipée de l'alternateur et du réducteur, elle-même montée rotative autour d'un axe vertical porté par le mât 1. Le montage rotatif de la nacelle 4 permet aux pales 3 de se placer face au vent, représenté schématiquement par des flèches V. La nacelle 4 est équipée d'un démultiplicateur mécanique, d'un alternateur ou d'une génératrice de courant électrique.

La base du mât 1 est ancrée dans un massif 5 généralement en béton armé, de plusieurs centaines de tonnes pour la résistance au moment créé par les efforts dus au vent. Le massif 5 peut faire saillie sur la surface du sol S ou être encastré à une certaine profondeur.

La hauteur du mât 1 peut dépasser 100 m. Le mât 1 est creux et son diamètre peut être de l'ordre de 1 à 5 m. Le mât 1 est constitué d'une virole métallique soudée ou en treillis ou est réalisé en béton armé.

L'éolienne comporte des équipements secondaires tels qu'un transformateur élévateur de tension, et des équipements de contrôle, de commande et de sécurité.

Selon l'invention, l'éolienne comporte au moins un conduit 6 s'étendant verticalement suivant le mât 1 entre une ouverture basse 7 située en partie inférieure du mât et une ouverture haute 8 située en partie supérieure du mât.

Selon l'exemple représenté, deux conduits 6, 6a sont prévus dans le mât 1 et débouchent, en partie haute, par deux ouvertures diamétralement opposées 8, 8a dans un diffuseur annulaire 9, les deux conduits 6, 6a étant reliés à la même ouverture basse 7.

Toujours dans l'exemple représenté, l'éolienne A avec ses conduits 6, 6a est prévue comme cheminée d'évacuation de gaz de combustion ou d'air vicié. Les ouvertures hautes 8, 8a sont prévues dans la zone de turbulence créée par les pales à l'opposé du sens du vent. La position des ouvertures sur le mât dépend de la section des conduites par rapport au diamètre du mât.

Pour éviter un rejet des gaz directement vers les pales 3 de la turbine, un déflecteur motorisé 10 est prévu pour suivre l'orientation des pales autour de l'axe vertical du mât 1. Lorsque les pales 3 tournent dans un plan vertical qui se trouve devant la sortie 8 ou 8a, le déflecteur 10 se trouve devant cette sortie et les gaz sont évacués latéralement suivant la direction des flèches 11, puis chassés dans le sens du vent selon les flèches 12.

En variante, au lieu d'installer des conduits à l'intérieur du mât 1, le volume creux de ce mât 1 peut constituer lui-même le conduit pour les gaz, une ouverture d'entrée étant prévue en partie basse et une ouverture de sortie en partie haute dans la paroi du mât 1.

Selon une autre variante, notamment dans le cas d'éoliennes de petite taille, le conduit 6 peut être prévu à l'extérieur du mât 1, fixé le long du mât.

Les conduits 6, 6a peuvent être isolés thermiquement, notamment dans le cas d'évacuation de gaz de combustion chauds ou nocifs. Dans le cas où l'éolienne A est utilisée pour évacuer de l'air vicié ou malodorant, généralement à température ambiante ou proche de l'ambiante, le mât 1 peut être directement utilisé comme conduit de cheminée.

L'éolienne A est installée de préférence à proximité d'un site industriel B, par exemple une installation d'épuration d'eaux usées génératrices d'air vicié ou malodorant qui est dirigé vers l'ouverture basse 7 de l'éolienne.

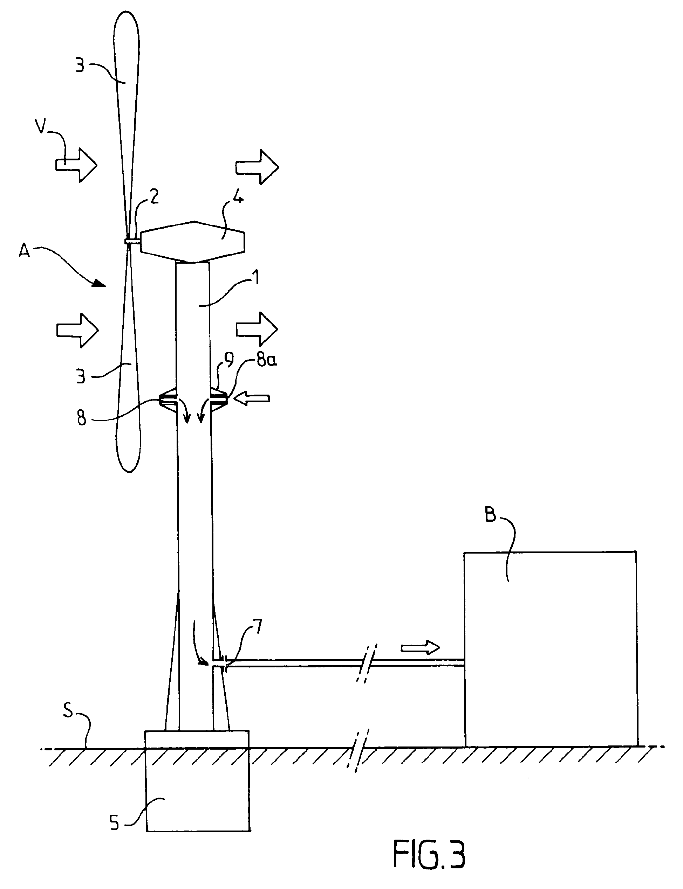

L'éolienne A, au lieu de servir de cheminée d'évacuation de gaz de combustion ou d'air vicié, peut être utilisée comme conduit d'aspiration d'air propre, bien au-dessus du sol, pour alimenter des installations consommatrices d'air telles que des ensembles industriels agroalimentaires, chimie, salle blanches, etc. Dans ce cas, l'orifice 8 situé en partie haute du mât constitue l'orifice d'entrée de l'air tandis que l'orifice 7 situé en partie basse constitue l'orifice de sortie, comme illustré sur Fig.3 où le volume creux du mât 1 sert de conduit entre les orifices 8, 8a et 7.

Selon la disposition, une cage verticale permet l'accès à la nacelle pour la maintenance des équipements électromécaniques.

Le fonctionnement de l'éolienne résulte des explications qui précèdent.

Dans le cas où l'éolienne A est prévue pour la dispersion de gaz de combustion épurés ou d'air vicié ou nauséabond, les effluents gazeux sont dispersés efficacement dans l'atmosphère par combinaison de la hauteur de l'ouverture de sortie 8, 8a, et des turbulences créées par les pales 3 de l'hélice.

La production électrique de l'éolienne A participe à l'alimentation électrique du site industriel B proche, par exemple usine de traitement d'eaux résiduaires, décharges municipales, installations de séchage de boues de traitement d'eaux résiduaires, ou à l'augmentation de l'exportation électrique d'une unité de production d'énergie.

L'éolienne A selon l'invention peut être utilisée pour la dispersion d'effluents gazeux provenant de diverses installations telles que :
- chaufferies industrielles pour toutes énergies fossiles et biomasse ;
- unités d'incinération de déchets ménagers et spéciaux ;
- échappements de moteurs diesel ou biogaz ;
- évacuations d'air vicié et malodorant de stations de compostage, ou de procédé divers ;
- évacuations d'effluents gazeux sur centres d'enfouissement ;
- toutes applications de dispersion d'effluents gazeux : agro alimentaire, chimie et pétro chimie, papeterie, sucrerie, déshydratation, etc.

Comme déjà indiqué, l'éolienne A peut aussi être utilisée pour l'aspiration d'air propre en hauteur.

L'invention permet de valoriser sensiblement l'investissement nécessaire à la réalisation d'une éolienne qui, selon l'invention, tout en assurant une production d'énergie électrique, permet soit de disperser des gaz de combustion ou un air vicié ou malodorant, soit d'aspirer de l'air propre. L'économie porte sur le coût de la cheminée, du massif en béton, de la signalisation aérienne, des accès de maintenance et enfin du raccordement électrique sur le réseau national.
La vue d'une éolienne, à la place d'une cheminée classique, modifie favorablement la perception environnementale d'un site industriel, qui s'en trouve valorisé.

## Revendications

1. Eolienne comprenant un mât vertical équipé d'un rotor avec pales et dont la base est ancrée dans un massif, comportant au moins un conduit (6, 6a) s'étendant verticalement suivant le mât (1) entre une ouverture basse (7) située en partie inférieure du mât et une ouverture haute (8, 8a) située en partie supérieure du mât, **caractérisée en ce que** l'ouverture haute (8,8a) du conduit (6,6a) est située dans la zone des turbulences créées par les pales (3) du rotor pour favoriser la dispersion des gaz dans l'atmosphère, le conduit (6,6a) pouvant servir de cheminée soit pour l'évacuation de gaz, soit pour l'aspiration d'air propre.

2. Eolienne selon la revendication 1, **caractérisée en ce qu'**un déflecteur motorisé (10) est mis en place au niveau de l'ouverture haute (8, 8a) pour éviter le rejet des gaz directement sur les pales du rotor.

3. Eolienne selon la revendication 1 ou 2, dont le mât est creux, **caractérisée en ce que** le conduit (6, 6a) est situé à l'intérieur du mât.

4. Eolienne selon la revendication 3, **caractérisée en ce que** le conduit est constitué par l'espace creux du mât (1) lui-même.

5. Eolienne selon la revendication 1 ou 2, **caractérisée en ce que** le conduit est disposé à l'extérieur du mât et fixé le long de celui-ci.

6. Eolienne selon la revendication 1 ou 2, **caractérisée en ce qu'**un diffuseur annulaire (9) est prévu en partie supérieure en liaison avec l'ouverture haute (8, 8a) du conduit (6,6a).

7. Eolienne selon la revendication 1 ou 2, pour rejeter des gaz de combustion chauds ou nocifs, **caractérisée en ce qu'**un ou plusieurs conduits indépendants (6,6a) sont prévus à l'intérieur du mât.

8. Eolienne selon l'une quelconque des revendications précédentes, **caractérisée en ce qu'**elle est installée à proximité d'une unité industrielle quelconque (en particulier: station d'épuration d'eaux résiduaires, séchage de boues, agroalimentaire, chimie, pétrochimie) pour disperser dans l'atmosphère l'air vicié provenant de l'unité, et pour fournir de l'énergie électrique à cette unité industrielle.

9. Eolienne selon la revendication 7, **caractérisée en ce qu'**elle est installée à proximité d'une centrale thermique, chaufferie industrielle, ou unité d'incinération de déchets dont elle constitue une cheminée de rejet des gaz de combustion.

10. Eolienne selon l'une quelconque des revendications précédentes, **caractérisée en ce qu'**une cloison interne est prévue dans l'espace creux du mât de l'éolienne pour une séparation en plusieurs compartiments.

11. Eolienne selon l'une quelconque des revendications précédentes, **caractérisée en ce que** le rotor est monté sur l'axe de sortie (2) d'une nacelle (4) montée rotative autour d'un axe vertical porté par le mât , le montage rotatif permettant aux pales (3) de l'hélice de se placer face au vent, et deux ouvertures hautes diamétralement opposées (8, 8a) étant prévues fixes sur la tour de sorte que la zone des turbulences créées par les pales affecte toujours au moins l'écoulement sortant par l'une des ouvertures.

12. Eolienne selon l'une quelconque des revendications précédentes, **caractérisée en ce que** les ouvertures (8,8a) sont situées sur le mât à une distance verticale de l'axe de rotation (2) des pales (3) supérieure à la moitié de la longueur des pales, de préférence situées au voisinage de la zone balayée par l'extrémité des pales (3) où les turbulences sont fortes.
